# EUROPEAN PATENT SPECIFICATION

(11) **EP 2 878 470 B1**
(45) Date of publication and mention of the grant of the patent: **02.11.2016**
(21) Application number: 14194939.6
(22) Date of filing: 26.11.2014
(51) Int. Cl.: B60J 1/20

(54) **Roller blind system**
Rollosystem
Système de store à enrouleur

(30) Priority: 28.11.2013 SE 1351418
(43) Date of publication of application: 03.06.2015
(73) Proprietor: Scania CV AB, 151 87 Södertälje (SE)
(72) Inventor: Lang, Christer, 618 30 Kolmården (SE)
(74) Representative: Scania CV AB

(56) References cited:
- WO-A1-94/13923
- WO-A1-2007/006333
- DE-A1-102005 013 115

## Description

### Technical field of the invention

The present invention concerns a roller blind system according to the preamble of the independent claim. More specifically, it concerns a roller blind system that is easy to install and use, and in which the roller blinds do not obstruct light in its rolled up state.

### Background of the invention

In vehicles, roller blinds are often present in windshields, side windows and rear windows to shield the driver or passengers from, for example, disturbing light. The roller blind consist of a flexible material, which may be entirely opaque or partly transparent.
Various solutions exist for keeping the roller blind in place in the desired position, e.g. in its drawn-down position, which solutions often utilize friction between connecting components on the front edge of the blind and side rails mounted on both sides of the window.

For example, the roller blind is wound up around a rod that is mounted in mounting elements on both sides of the two ends of the rod. Spring elements are arranged in connection to the rod and exert a rotary force on the rod, which in turn exerts a force on the roller blind in a direction such that it is wound up onto the rod.

The front edge of the roller blind is fastened to an essentially rigid edge bar that is parallel to the roller blind rod. The edge bar exhibits two end parts that extend outward somewhat beyond the lateral edges of the roller blind.

The two end parts are configured so as to interwork with two guide rails, and these two guide rails are intended to be mounted on both sides of, for example, a side window of a vehicle.

The guide rails are mounted essentially parallel in relation to one another at a distance that somewhat exceeds the width of the roller blind.

The end parts of the edge bar interworks with the guide elements in such a way that the roller blind can be drawn to the desired position and then, by means of the interaction between the end parts and the guide rails, and due to the roll-up force by which the roller blind is being acted upon, halted in the desired position. In this position the edge bar is preferably at a right angle in relation to the guide rails.

The guide rails can consist, for example, of extended profiles which, in cross-section, present a track in which a guide pin arranged on the end parts of the edge bar can run. The guide pin has a cross-section that is somewhat smaller than but essentially consistent with the cross-section of the track, so that the guide pin runs smoothly in the track. The guide pin is further designed so that it has an asymmetrical shape in a direction perpendicular to the guide elements and parallel with the edge bar, such as an ellipsoid shape. The roller blind is fastened to the edge bar in such a way that a rotary motion is applied to the edge bar due to the roll-up force by which the roller blind is being acted upon. This rotary motion acts upon the guide pins so that they rotate somewhat and will then lock themselves in the track and thus secure the guide pin in the locked position, and the roller blind will remain in the desired position.

Document WO94/13923 discloses such a system and is considered to be the closest prior art for the current invention.

US-6086133 concerns a roller blind for a vehicle in which the movement of the roller blind is acted upon by a system involving rods inside profiles. One object of the roller blind is to avoid the device disrupting the field of view of the driver in its rolled-down or rolled-up position.

Side windows in vehicles often exhibit upper corners that are rounded. The reason is that the shape of the upper corners is affected by the weather stripping that must be disposed around the side windows, and by the smallest possible bending radius that such weather stripping has. Another reason is that the compressibility of the doorframe must be taken into account.

This entails that the rails for the roller blind cannot go up into the corners. As a result, the roller blind is, despite being in its rolled-up state, at risk of blocking the view out through the upper part of the window.

Disadvantages, which the roller blind described below is intended to avoid, thus exist with respect both to the installation of the roller blind system and with respect to the ability to see out through the upper part of the window. The object is thus to avoid these disadvantages.

### Summary of the invention

The aforementioned object is achieved by means of the roller blind system defined in the independent claim.

Preferred embodiments are defined by the non-independent claims.

According to the roller blind system, the guide pins interwork with the guide elements via extension parts that are secured to an edge bar that is fastened to the front edge of the roller blind. This makes it possible to dispose the guide elements closer to the window, which has the advantage that cover strips associated with the guide elements are needed to a lesser extent. This simplifies the installation, which is a cost-savings.

The tracks in the guide elements are further equipped with rotation spaces in their end parts. When the guide pins reach their end position, said rotation spaces make it possible for the guide pins to rotate more than in other parts of the track. This means that the roller blind can be rolled up further, out of sight, which provides better visibility in the rolled-up position.

### Brief description of the drawing

Figures 1a - 1 c shows cross-sectional views of one embodiment of the roller blind system in various states.
Figures 2a and 2b show frontal views of one embodiment of the roller blind system in various states.
Figures 3a and 3b show cross-sectional views of the control element and its interworking with the roller blind rod in various states.
Figure 4 and 5 show schematic cross-sectional views of different embodiments of the guide pin.

### Detailed description of preferred embodiments of the invention

The roller blind system will now be described in detail with reference to the accompanying figures. The same or equivalent components are designated using the same reference designations in the figures.

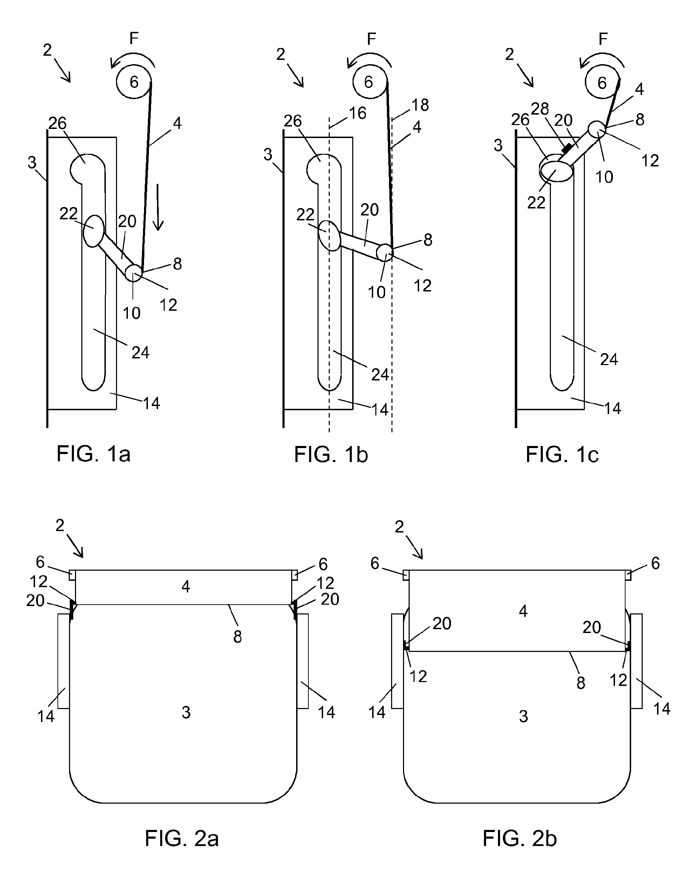

First, with reference to Figures 1a - 1 c and 2a - 2b, there is shown a roller blind system 2 installed on a window 3 and comprising a roller blind 4 adapted so as to be rolled up onto a roller blind rod 6 with a roll-up force F, and wherein the front edge 8 of the roller blind is secured to an essentially rigid edge bar 10 that is parallel to the roller blind rod 6. In the figures the edge bar has a circular cross-section, although other cross-sections, e.g. ellipsoid or rectangular, are naturally also possible. The edge bar 10 exhibits two end parts 12 that are configured so as to interwork with two longitudinal guide elements 14 adapted so as to be mounted essentially parallel in relation to one another on opposite sides of the roller blind 4 in a first plane 16 (see Figure 1 b), and so that the roller blind defines, in its rolled-out state, a second plan 18 (see Figure 1 b).

The guide elements 14 preferably also comprise mounting parts for the roller blind rod, although these have been omitted from the figures for the sake of clarity. The mounting parts interwork with the roller blind rod so that the rod is held in place and the roll-up force F is applied, e.g. by means of a spring arrangement, to the roller blind rod in a manner that will be familiar to one skilled in the art.

The end parts 12 of the edge bar 10 interwork with the guide elements 14 via extension parts 20 and guide pins 22 in such a way that said first plane 16 is essentially parallel to, and at a distance from, said second plane 18. This distance is naturally dependent upon the length of the extension parts, as will be discussed below.

The guide pins 22 are designed so as to run in longitudinal tracks 24 in the guide elements 14, and so that the extension parts 20 constitute rigid connections between the edge bar 10 and the guide pins 22 on opposite sides of the edge bar 10. The extension parts 20 are parallel in relation to one another and perpendicular in relation to the edge bar 10.

The roller blind system works in such a way that the roller blind is brought manually to a desired position by grabbing the edge bar 4 and moving it in a direction counter to the roll-up direction 4, and when the edge bar is released, the roller blind will stop in the desired position as a result of the interworking between the guide pins 22 and the guide elements 14, and through the influence of the roll-up force F.

The tracks 24 in the guide elements 14 are equipped at one end with the rotation spaces 26 in which the guide pins 22 can rotate more than they can in other parts of the tracks 24.

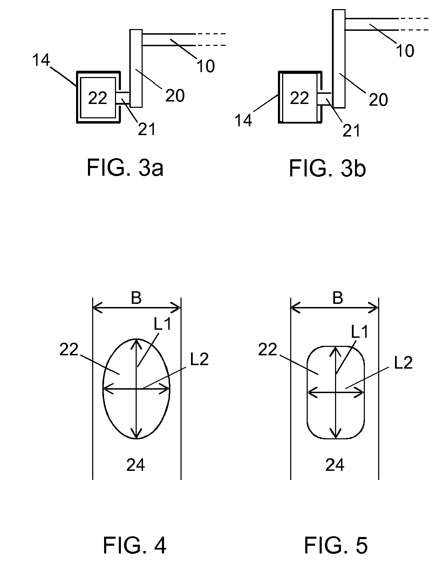

The guide element 14 preferably consists of a longitudinal profile that exhibits, in its cross-section, the track 24 in which the guide pin 22 is designed so as to run. An example of such a guide element is shown Figures 3a and 3b. The profile can consist, for example, of a bent or compression-molded plate. The guide pin is secured to the extension part by means of a fastening part that runs in a longitudinal slit in the guide element 14.

The guide pins 22 are configured so as to be in at least two states; a movable state in which the guide pins 22 are able to run in the tracks 24, and a locking state in which the guide pins 22 are subjected to rotary forces, so that the guide pins are forced to rotate and thus lock themselves in their respective tracks, thereby securing the guide pins in the locked position in relation to the guide elements 14.

The guide pin 22 has a cross-section in a plane perpendicular to the longitudinal direction of the guide element, which cross-section is somewhat smaller than and essentially conforms to the shape of the cross-section of the track. This is illustrated in Figure 3a and elsewhere. The cross-section is rectangular here, but other shapes, such as circular or elliptical, are possible. The guide pin can thus run smoothly in the track 24 when the guide pin 22 is in its movable state. Figure 3b illustrates the situation when the guide pin is subjected to a rotary force entailing that the guide pin will be forced to abut two opposing inner walls of the guide element and thereby lock itself in the track.

Figures 4 and 5 illustrate different embodiments of the guide pin in a plane along the longitudinal direction of the guide element and perpendicular to the first plane 16 (see Figure 1 b). The guide pin 22 is designed so that it has an eccentric shape in this plane, such as an ellipsoid shape (see Figure 4), with a longer axis and a shorter axis, whereupon said longer axis exhibits a length L1 that exceeds a width B of the track, and said shorter axis exhibits a length L2 that is smaller than said width. An alternative embodiment of the guide pin 22 is shown in Figure 5, where the guide pin has a rectangular shape with rounded corners, and exhibits a longer axis with the length L1 and a shorter axis with the length L2.

The extension part 22 preferably consists of an elongated disk with a plane for the largest surface, which is essentially perpendicular to said second plane 18. It has an extent in the longitudinal direction that is on the order of 1 - 5 centimeters, measuring from the center of the edge bar 10 to the center of the guide pin 22, and has a thickness of on the order of 1 - 5 mm.

The function of the roller blind system will be clarified below with reference to the figures.

Figure 1a shows a situation in which the roller blind is being pulled down in the figure by means of manual action, as is indicated by the vertical arrow. The guide pin 22 is then in its movable state, and moves downward in the track 24.
In Figure 1 b, the roller blind is in a desired position and the user lets go of the edge bar 10, with the result that the roll-up force F acts upon the extension parts 20 that are fixedly secured to the guide pins 22, which are caused to rotate in the tracks 24 until they impact the walls in the guide elements and are held in place by friction. This state is also illustrated in Figure 2b, which shows a frontal view.

If the position of the roller blind is subsequently to be changed, one first pulls the edge bar downward slightly to release the guide pins from the inner walls of the control elements and then moves the roller blind upward or downward to its desired position.

A rotation space 26 is thus arranged in the top end of the track. Its purpose is to permit additional rotation of the guide pin when it reaches there. This makes it possible to thereby roll the roller blind additionally onto the roller blind rod, thereby improving the visibility for the driver in the vehicle.
This state is shown in Figure 1 c and in Figure 2b. Figure 1 c also shows a stop part 28. The purpose of the stop part 28 is to prevent further rotation of the guide pin 22 and the extension part 20.
One alternative to arranging a stop part 28 is to design the rotation space 26 in such a way that additional rotation is prevented once the desired position is reached.

The interworking between the guide pin 22 and the guide element is shown with reference to Figures 3a and 3b.
As noted previously, the extension part 20 constitutes a secure connection between the guide pin 22 and the edge bar 10, so that an upward or downward movement of the edge bar entails that the guide pin will perform a rotary movement. Figure 3a thus shows the guide pin in a movable state, as does Figure 1a as well.
Figure 3b shows the guide pin in a locking state, as do Figures 1b and 2b as well.

The foregoing invention is not limited to the preferred embodiments described above. Various alternatives, modifications and equivalents can be used. The embodiments above are thus not to be viewed as limitative of the protective scope of the invention, which is defined by the accompanying claims.

## Claims

1. A roller blind system (2) comprising a roller blind (4) adapted so as to be rolled up onto a roller blind rod (6) with a roll-up force F, and so that the front edge (8) of the roller blind is secured to an essentially rigid edge bar (10) that is parallel to the roller blind rod (6), and so that the edge bar (10) exhibits two end parts (12) that are configured so as to interwork with two longitudinal guide elements (14) that are adapted so as to be mounted essentially parallel in relation to one another on opposite sides of the roller blind (4) in a first plane (16), whereupon said roller blind defines, in its rolled-out state, a second plane (18), wherein said end parts (12) on the edge bar (10) interwork with the guide elements (14) via extension parts (20) and guide pins (22) in such a way that said first plane (16) is essentially parallel to, and at a distance from, said second plane (18), and in that said guide pins (22) are designed so as to run in longitudinal tracks (24) in the guide elements (14), and in that said extension parts (20) consist of rigid connections between the edge bar (10) and the guide pins (22) on opposite sides of the edge bar (10), and in that the extension parts (20) are parallel in relation to one another and perpendicular in relation to the edge bar (10), whereupon the roller blind (4) stops in a desired position through the interworking between the guide pins (22) and the guide elements (14) and by means of the influence of the roll-up force F, **characterized in that** the tracks (24) in the guide elements (14) are equipped at one end with the rotation spaces (26) in which the guide pins (22) can rotate more than they can in other parts of the tracks (24).

2. The roller blind system (2) according to claim 1, wherein said guide elements (14) consist of an extended profile that exhibits, in its cross-section, said track (24) in which said guide pin (22) is designed to run.

3. The roller blind system (2) according to claim1 or 2, wherein the guide pins (22) are configured so as to be in at least two states; a movable state when the guide pins (22) are able to run in said tracks (24), and a locking state when the guide pins (22) are subjected to rotary forces such that the guide pins are forced to rotate and thereby lock themselves in their respective tracks, thereby securing the guide pins in the locked position in relation to the guide elements (14).

4. The roller blind system (2) according to claim 3, wherein the guide pin (22) has a cross-section that is somewhat smaller than and essentially conforms to the shape of the cross-section of the track, so that the guide pin can run smoothly in the track (24) when the guide pin (22) is in said movable state.

5. The roller blind system (2) according to any of claims 1 - 4, wherein the guide pin (22) is designed in such a way that it has, in a plane along the longitudinal direction of the guide element (14) and perpendicular to the first plane (16), an eccentric shape, such as an ellipsoid shape, with a longer axis and a shorter axis, whereupon said longer axis exhibits a length L1 that exceeds a width B of the track and said shorter axis exhibits a length L2 that is less than said width.

6. The roller blind system (2) according to any of claims 1 - 5, wherein said extension part (22) consists of an elongated disk with a plane for the largest surface that is essentially perpendicular to s aid second plane (18).

7. The roller blind system (2) according to any of claims 1 - 6, wherein said extension part (20) has an extent in the longitudinal direction that is on the order of 1 - 5 centimeters, measuring from the center of the edge bar (10) to the center of the guide pin (22), and has a thickness of on the order of 1 - 5 mm.

## Patentansprüche

1. Rollosystem (2), welches einen angebrachten Sichtschutz (4) umfasst, der dazu ausgebildet ist, an einer Rollostange (6) mit einer Aufrollkraft F aufgerollt zu werden, und derart, dass das vordere Ende (8) des Sichtschutzes an einem im Wesentlichen starren Randstab (10) befestigt ist, der parallel zu der Rollostange (6) verläuft, und dass der Randstab (10) zwei Endstücke (12) aufweist, die angebracht sind, um mit zwei länglichen Führungselementen (14) zusammenzuwirken, die dazu ausgebildet sind, im Wesentlichen parallel zueinander in einer ersten Ebene (16) auf den entgegengesetzten Seiten des Rollos (4) angebracht zu werden, wobei der Rollo im ausgerollten Zustand eine zweite Ebene (18) definiert, wobei die Endstücke (12) des Randstabes (10) mit den Führungselementen (14) über Verlängerungsteile (20) und Führungsstifte (22) derart zusammenwirken, dass die erste Ebene (16) im Wesentlichen parallel zu der zweiten Ebene (18) ist und in einem Abstand von der zweiten Ebene (18) liegt, und dass die Führungsstifte (22) dazu ausgelegt sind, um sich in länglichen Bahnen (24) in den Führungselementen (14) zu bewegen, und dass die Verlängerungsteile (20) aus starren Verbindungen zwischen dem Randstab (10) und den Führungsstiften (22) an entgegengesetzten Seiten des Randstabes (10) bestehen, und dass die Verlängerungsteile (20) zueinander parallel und senkrecht zum Randstab (10) sind, wobei der Rollo (4) in gewünschter Position durch das Zusammenwirken der Führungsstifte (22) und der Führungselemente (14) und der Mitwirkung der Aufrollkraft F stoppt, **dadurch gekennzeichnet, dass** die Bahnen (24) in den Führungselementen (14) an einem Ende mit einem Drehraum (26) ausgebildet sind, in welchem die Führungsstifte (22) sich weiter drehen können als in anderen Teilen der Bahnen (24).

2. Rollosystem (2) gemäß Anspruch 1, wobei die Führungselemente (14) aus einem erweiterten Profil bestehen, das im Querschnitt die Bahn (24) zeigt in welcher der Führungsstift (22) sich bewegen soll.

3. Rollosystem gemäß den Ansprüchen 1 oder 2, wobei die Führungsstifte (22) dazu konstruiert sind, um sich in mindestens zwei Zuständen befinden zu können; nämlich in einem beweglichen Zustand, wenn die Führungsstifte (22) sich in den Bahnen (24) bewegen sollen, und in einem eingerasteten Zustand, in welchem die Führungsstifte (22) Drehkräften ausgesetzt sind, sodass sie gezwungen sind, sich zu drehen und dadurch in ihren jeweiligen Bahnen zu stoppen, wodurch die Führungsstifte (22) sich in ihrer festen Position in den Führungselementen (14) befinden.

4. Rollosystem (2) gemäß Anspruch 3, wobei der Führungsstift (22) einen Querschnitt aufweist, der etwas kleiner ist als der Querschnitt der Bahn (24), wodurch sich der Führungsstift (22) reibungslos in der Bahn (24) bewegen kann, wenn er sich in seinem beweglichen Zustand befindet.

5. Rollosystem (2) gemäß einem der Ansprüche 1-4, wobei der Führungsstift (22) derart konstruiert ist, dass er in einer Ebene entlang der länglichen Richtung des Führungselements (14) und senkrecht zur ersten Ebene (16) eine exzentrische Form aufweist, wie beispielsweise eine Ellipse, mit einer längeren Achse und einer kürzeren Achse, wobei die längere Achse eine Länge L1 aufweist, welche die Breite B überschreitet, und die kürzere Achse eine Länge L2 aufweist, welche kürzer als die Breite B ist.

6. Rollosystem (2) gemäß einem der Ansprüche 1-5, wobei das Verlängerungsteil bzw. der Führungsstift (22) aus einer länglichen Scheibe mit einer Ebene für die größte Fläche besteht, die im Wesentlichen senkrecht zu der Ebene (18) ist.

7. Rollosystem (2) gemäß einem der Ansprüche 1-6, wobei das Verlängerungsteil (20) eine Länge von 1-5 Zentimetern, von der Mitte des Randstabes (10) bis zur Mitte des Führungsstiftes (22) gemessen, und eine Breite von 1-5 Millimetern hat.

## Revendications

1. Système de store roulant (2) comprenant un store roulant (4) adapté de façon à être enroulé sur une tige de store roulant (6) avec une force d'enroulement F, et de telle sorte que le bord avant (8) du store roulant soit fixé à une barre de bord essentiellement rigide (10) qui est parallèle à la tige de store roulant (6), et de telle sorte que la barre de bord (10) présente deux parties d'extrémité (12) qui sont configurées de façon à travailler mutuellement avec deux éléments de guidage longitudinaux (14) qui sont adaptés de façon à être montés de façon essentiellement parallèle l'un par rapport à l'autre sur des côtés opposés du store roulant (4) dans un premier plan (16), suite à quoi ledit store roulant définit, dans son état déroulé, un deuxième plan (18), dans lequel lesdites parties d'extrémité (12) sur la barre de bord (10) travaillent mutuellement avec les éléments de guidage (14) par l'intermédiaire de parties d'extension (20) et de broches de guidage (22) de façon telle que ledit premier plan (16) est essentiellement parallèle audit deuxième plan (18), et à une certaine distance de celui-ci, et dans lequel lesdites broches de guidage (22) sont conçues de façon à s'étendre dans des pistes longitudinales (24) des éléments de guidage (14), et dans lequel lesdites parties d'extension (20) sont constituées par des liaisons rigides entre la barre de bord (10) et les broches de guidage (22) sur des côtés opposés de la barre de bord (10), et dans lequel les parties d'extension (20) sont parallèles les unes par rapport aux autres et perpendiculaires à la barre de bord (10), suite à quoi le store roulant (4) s'arrête dans une position désirée grâce au travail mutuel entre les broches de guidage (22) et les élément de guidage (14), et à l'aide de l'influence de la force d'enroulement F, **caractérisé en ce que** :
les pistes (24) des éléments de guidage (14) sont équipées, à une extrémité, des espaces de rotation (26) dans lesquels les broches de guidage (22) peuvent tourner davantage qu'elles ne le peuvent dans d'autres parties des pistes (24).

2. Système de store roulant (2) selon la revendication 1, dans lequel lesdits éléments de guidage (14) sont constitués par un profil étendu qui présente, dans sa section transversale, lesdites pistes (24) dans lesquelles ladite broche de guidage (22) est conçue de façon à circuler.

3. Système de store roulant (2) selon la revendication 1 ou 2, dans lequel les broches de guidage (22) sont configurées de façon à se trouver dans au moins deux états ; un état mobile lorsque les broches de guidage (22) sont susceptibles de circuler dans lesdites pistes (24), et un état de verrouillage lorsque les broches de guidage (22) sont soumises à des forces de rotation telles que les broches de guidage sont contraintes de tourner, et se verrouillent par conséquent elles-mêmes dans leurs pistes respectives, de façon à fixer ainsi les broches de guidage dans la position verrouillée par rapport aux éléments de guidage (14).

4. Système de store roulant (2) selon la revendication 3, dans lequel la broche de guidage (22) a une section transversale qui est légèrement plus petite que la forme de la section transversale de la piste et qui se conforme essentiellement à celle-ci, de sorte que la broche de guidage peut circuler avec aisance dans la piste (24) lorsque la broche de guidage (22) est dans ledit état mobile.

5. Système de store roulant (2) selon l'une quelconque des revendications 1 à 4, dans lequel la broche de guidage (22) est conçue de telle sorte qu'elle a, dans un plan le long de la direction longitudinale de l'élément de guidage (14) et perpendiculairement au premier plan (16), une forme excentrique, telle qu'une forme ellipsoïdale, avec un axe plus long et un axe plus court, ledit axe plus long présentant alors une longueur L1 qui excède une largeur B de la piste et ledit axe plus court présentant une longueur L2 qui est inférieure à ladite largeur.

6. Système de store roulant (2) selon l'une quelconque des revendications 1 à 5, dans lequel ladite partie d'extension (22) est constituée par un disque allongé ayant un plan pour la plus grande surface qui est essentiellement perpendiculaire audit deuxième plan (18).

7. Système de store roulant (2) selon l'une quelconque des revendications 1 à 6, dans lequel ladite partie d'extension (20) a une étendue dans la direction longitudinale qui est de l'ordre de 1 à 5 centimètres, mesurée du centre de la barre de bord (10) au centre de la broche de guidage (22), et a une épaisseur de l'ordre de 1 à 5 mm.
